# EUROPEAN PATENT SPECIFICATION

(11) **EP 0 778 698 B1**
(45) Date of publication and mention of the grant of the patent: **12.09.2001**
(21) Application number: 96118864.6
(22) Date of filing: 26.11.1996
(51) Int. Cl.: H04N 5/14, H04N 7/36

(54) **Method and apparatus for fine motion estimation in digital video pictures**
Verfahren und Vorrichtung zur Feinbestimmung eines Bewegungsvektors für digitale Videobilder
Procédé et dispositif d'estimation précise d'un mouvement pour images vidéo numériques

(30) Priority: 06.12.1995 EP 95402787; 12.04.1996 EP 96105773
(43) Date of publication of application: 11.06.1997
(73) Proprietor: THOMSON multimedia, 92648 Boulogne Cédex (FR)
(72) Inventor: Bard, Jean-Michel, 38920 Crolles (FR); Charlot, Didier, 38000 Grenoble (FR); Teichner, Detlef, Dr., 78126 Königsfeld (DE); Canfield, Barth, Fishers, Indiana 46038 (US); Pirson, Alain, 38430 Moirans (FR); Graf, Andreas, 78048 VS-Schwenningen (DE); Cuney, Clotilde, 38000 Grenoble (FR)
(74) Representative: Schäferjohann, Volker Willi

(56) References cited:
- EP-A- 0 554 586
- EP-A- 0 574 192
- US-A- 5 329 318
- IEEE TRANSACTIONS ON SIGNAL PROCESSING, vol. 41, no. 2, 1 February 1993, pages 889-900, XP000346029 YEU-SHEN JEHNG ET AL: "AN EFFICIENT AND SIMPLE VLSI TREE ARCHITECTURE FOR MOTION ESTIMATION ALGORITHMS"
- IEEE TRANSACTIONS ON CONSUMER ELECTRONICS, vol. 40, no. 3, pages 234-241, XP000471179 JECHANG JEONG ET AL: "DEVELOPMENT OF AN EXPERIMENTAL FULL-DIGITAL HDTV SYSTEM: ALGORITHM AND IMPLEMENTATION"
- MULTIDIMENSIONAL SIGNAL PROCESSING, SAN FRANCISCO, MAR. 23 - 26, 1992, vol. 3, 23 March 1992, INSTITUTE OF ELECTRICAL AND ELECTRONICS ENGINEERS, pages 465-468, XP000378969 SIU-LEONG IU: "COMPARISION OF MOTION COMPENSATION USING DIFFERENT DEGREES OF SUB- PIXEL ACCURACY FOR INTERFIELD/INTERFRAME HYBRID CODING OF HDTV IMAGE SEQUENCES"
- VISUAL COMMUNICATIONS AND IMAGE PROCESSING, vol. 1818, 18 - 20 November 1992, BELLINGHAM, WA, US, pages 1462-1474, XP000505403 XIAOBANG LEE: "A Fast Feature Matching Algorithm of Motion Compensation for Hierarchical Video CODEC"
- SIGNAL PROCESSING IMAGE COMMUNICATION., vol. 6, no. 3, June 1994, AMSTERDAM NL, pages 229-239, XP000451927 GERARD DE HAAN: "Sub-pixel motion estimation with 3-D recursive search block-matching"

## Description

The invention relates to an apparatus which is capable to carry out a fine motion estimation of digital video pictures. The fine motion estimation apparatus is part of a video encoder apparatus which performs data compression and encoding, especially conforming to the MPEG-2 Video Standard (ISO/IEC 13818-2).

### Background

ISO/IEC have standardised video compression methods for standard resolution as well as high resolution video signals and pictures, the so-called MPEG-2 standard.

MPEG-2 provides for three different picture coding types: Intra (I), Predicted (P) and Bidirectionally predicted or interpolated (B) frames or fields. Still, in P and B frames or fields, macro blocks can be coded intraframe or intrafield, respectively, if motion prediction does not give good results. The decision has to be made in the encoder, with criteria to be determined by the implementation. In addition, MPEG-2 allows for frame or field based DCT (Discrete Cosine Transform), which requires sorting of lines and another decision to be made by the encoder.

In digital video broadcasting applications, decoders are usually needed in a high volume while only a small number of encoders are employed to provide the service. A typical configuration is given by the DirecTv satellite service in the USA, where MPEG-2 encoders for about 150 simultaneous programs provide a nation-wide broadcasting service. This requires relatively cheap decoders whereas encoders can include more exhaustive circuitry and can be more expensive.

MPEG-2 video encoding and decoding can be implemented in an asymmetrical manner in which encoders include a high degree of complex circuitry while decoders must include only that range of functionality absolutely required to decode valid bit streams.

For that purpose, MPEG defines the syntax and the semantics of the bit stream and a so-called System Target Decoder. The implementation of the encoder is not ruled by the standard. This allows to built relatively simple encoders for applications with low demands on picture quality, as well as very complex encoders for high quality requirements.

For video broadcasting and entertainment applications reference levels for picture quality are set by existing video standards. For broadcasting of live events real-time operation of the encoder is a must. In order to cope with all different digital video applications and their respective requirements, the so-called MPEG Committee (Working Group 11 of ISO/IEC) has defined a set of Profiles and Levels. Profiles determine a certain subset of encoding tools belonging to the MPEG-2 standard. Different tools are used for specific encoding methods and applications. Levels restrict the vast ranges of parameters to those numbers which are used in common applications such as video broadcasting or video transmission over networks.

For video broadcasting services standard resolution video is related to ITU-R Recommendation 601 specifications or subsets of these, and can be handled by MPEG-2 Main Profile at Main Level (MP@ML). High definition video can be covered by the parameter sets defined in the High Levels of MPEG-2 (e.g. MP@HL).

The Main Profile comprises compression methods for video in the so-called 4:2:0 format, and it defines a variety of motion compensation and encoding modes, which are needed for high compression ratios. Motion compensation in the MP is based on frame and field based prediction in forward and backward direction, and includes refinements specifically targeted for interlaced video signals, such as the Dual Prime technique. For encoding, the MP allows frame and field based DCT, linear and non-linear quantization, standard and alternative zigzag scanning, and more.

Digital video broadcasting services will be based on bit rates in the range from as low as 1Mbit/s up to about 10Mbit/s. Raw data rates of video signals digitised according to the ITU-R Recommendation 601 comprise about 166Mbit/s, without blanking intervals, clock and synchronisation. For a typical bit rate of 4Mbit/s, which shall provide picture quality similar to existing NTSC and PAL video standards, a compression factor in the range of 40 is needed.

Compression ratios in this range are relatively easy to achieve for video signals which originate from film material, due to their non-interlaced nature and their low temporal repetition rate of 24Hz. Much more demanding requirements come from real video signals originated from video cameras, especially in sequences with rapid and random motion. For adequate reproduction of such pictures at high compression ratios, all motion prediction and encoding alternatives provided by MPEG-2 MP are mandatory.

In particular, the standard does not specify at all, how video signals should be prepared for compression. In many cases, it is desirable to reduce the number of pixels before compression. The pixel decimation process can be applied in horizontal and vertical picture dimensions but in any case, it requires appropriate pre-filtering. The same applies to the conversion from the so-called 4:2:2 YCbCr format to the 4:2:0 definition, as required for MPEG encoding. Also, it is a well-known fact, that pictures with noisy behaviour are not well suited for compression, due to the random nature of the noise components. A variety of noise reduction techniques can be applied before encoding, for instance, field and frame recursive averaging methods. Furthermore, it is not necessary to encode fields which appear twice in the video signal due to 3:2 pull-down. In the pre-processing stage, a detection and elimination of redundant fields is useful and can be implemented in conjunction with other pre-processing methods. The same holds for horizontal and vertical blanking intervals in the video signal, which can be eliminated also before encoding, thus giving more processing time for the compression itself.

An architecture for full-search block matching algorithm and a three step hierarchical search algorithm in a motion estimator is described in the article "An Efficient and Simple VLSI Tree Architecture for Motion Estimation Algorithms" from Yeu-Shen Jehng, Liang-Gee Chen in IEEE Transactions on Signal Processing 41(1993) Feb., No.2, New York.

An algorithm for motion estimation with sub-pixel accuracy in HDTV pictures is known from the article "Comparison of Motion Compensation Using Different Degrees of Sub-Pixel Accuracy for Interfield/Interframe Hybrid Coding of HDTV Image Sequences" of Siu-Leong Iu in Multidimensional Signal Processing, San Francisco, Mar. 23 -26, 1992; vol. 3, 23. March 1992, Institute of Electrical and Electronics Engineers, pages 465-468.

### Summary of the invention

It is an object of the invention to disclose a fine motion estimation apparatus in an MPEG2 Video Encoder which allows to perform block matching for the final stage of a hierarchical motion estimation system by means of VLSI circuitry. Therein the VLSI circuitry must be tailored to provide high speed computation as needed for real time execution of MPEG2 and related video encoding algorithms. This object is achieved by the features according to claim 1 of the patent application.

Due to the feature, that reconstructed data from the encoder prediction loop is used for motion estimation, more accurate motion estimation is gained, since the noise from the prediction process is taken into account.

Several search modes are defined in MPEG2-Standard, e.g. full-pel search, half-pel search and dual-prime search.
Half-pel search and dual-prime search modes require an interpolation of pixel data, in order to generate most accurate and most useful motion vectors. This interpolation needs to be done in horizontal and vertical direction of the picture, usually multiple times for the same pixel data with only slight shifts. Therefore, the interpolation process is usually quite time consuming and requires extensive processing power. Due to the feature, that a feedback loop is implemented in the supply path of the search window data, it is possible to make all necessary interpolation and averaging calculation for the different search modes without reading the same data from the external memory multiple times. The feedback path includes a buffer and an interpolation filter and allows to circle the same data for the different interpolation and prediction processes.

Further valuable features of the invention are apparent from the depending claims. The provision of additional input buses for pixel data of an upper and lower stripe of an HDTV picture allows motion estimation also in HDTV pictures, which are partitioned into horizontal stripes. The full fine motion apparatus according to claims 1 to 10 allows to perform all motion estimation modes defined by ISO 13818-2 in full accuracy and sequential manner. It performs full pel and half pel accurate search of fine motion vectors in forward and/or backward direction, from odd-to-odd, odd-to-even, even-to-odd, even-to-even fields and/or frame-to-frames. It also generates missing field or frame vectors from the coarse motion vectors received by appropriate scaling. It performs bi-directional interpolation of field and/or frame data. Furthermore, it is a particular advantage of this invention, that the motion estimation and prediction processes are combined in one circuit. Besides the advantage of minimising pixel and data storage, this yields the main benefit of controlling the entire prediction process in real time by a single circuit.

### Drawings

Preferred embodiments of the invention are described with reference to the accompanying drawings which show in:
- Fig. 1: a principle functional block diagram of an arrangement in which an apparatus according to the invention is used;
- Fig. 2: a basic block diagram showing an hierarchical motion estimation apparatus;
- Fig. 3: a block diagram of a fine motion estimation apparatus according to the invention;
- Fig. 4: an illustration of the prediction process;
- Fig. 5: an illustration of the full pel search window and
- Fig. 6: an illustration of the half pel search window.

### Preferred Embodiments

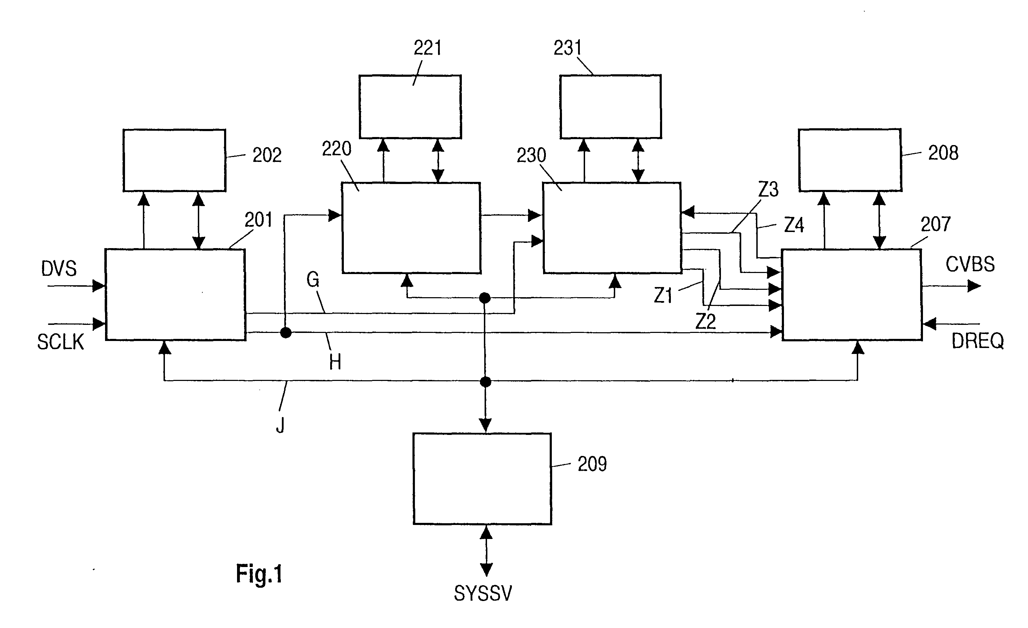

The invention deals with an apparatus for fine motion estimation in digital video pictures. The fine motion estimation apparatus works together with a coarse motion estimation stage of an encoding apparatus as shown in Fig. 1.

In this architecture the processing functions required for MPEG-2 encoding are organised in four main ICs or stages: a pre-processor circuit 201, a coarse 220 and a fine 230 motion estimation IC and a bit stream encoder 207. Pre-processing stage 201 contains all input and pre-processing functions required for data compression. Coarse motion estimation stage 220 and fine motion estimation stage 230 constitute a hierachical motion estimation stage including all necessary motion estimation and prediction functions and bit stream encoding stage 207 includes all bit stream generation functions for MPEG-2 encoding, but does not include motion prediction.

Each of these main processing stages has an interface to an external memory 202, 221, 231 and 208, respectively, as well as an interface to a controller 209, which provides for all programmable options of the encoder. Stages 201, 220, 230 and 207 may contain hardwired functionality as well as programmable circuits, such as micro controller or microcomputer cores which operate with respective software.

Due to this partitioning of functions, which is an aspect of another invention of the applicant described in another European patent application EP 95 119 207 (publication number EP-A-0 779 744), each of the stages 201, 220, 230 and 207 may be realised in one VLSI chip, since all stages contain just that many processing elements, as can be implemented on singular integrated circuits with the current state of the art VLSI technology, i.e. 0,8µ 2-layer HCMOS4 technology.

Memories 202, 221, 231 and 208 may consist of standard memory devices, such as 4 MBit DRAMs, SDRAMs or other feasible memories.

At the input of pre-processing stage 201 standard digital video signals in YC_{b}Cᵣ format related to ITU-R Recommendation 601 may be used, together with standard video synchronisation signals including 13,5 MHz clock, whereas the interfaces between stages 201 and 220 and between stages 230 and 207 relate to a specific definition, is described in a related European patent application EP 95 119 207 of the applicant. The encoder output interface at stage 207 provides at its output CVBS a compressed MPEG-2 video bit stream, such as the Packetized Elementary Bit stream (PES) defined in ISO 13818, together with suitable synchronisation signals. This bit stream can be read out using the data request input DREQ.

Pre-processing stage 201 is connected via a first bus H to coarse motion estimation stage 220 and bit stream encoding stage 207 for coding complexity pre-analysing purposes. Pre-analysing allows additional kinds of rate control within each macro block by adjusting the relevant coding parameters like, intra/inter and field/frame decision. Pre-processing stage 201 is also connected to fine motion estimation stage 230 via a second bus G. Both stages 220 and 230 are connected by a bus and have their own interfaces to standard memories 221 and 231, respectively.

The interfaces of stages 201, 221, 231 and 207 to the controller 209 are connected via a bi-directional third bus J and may use standard data, address and synchronisation definitions as related to standard controller devices, such as Motorola or Texas Instruments circuits, e.g. TMS 320030. The controller 209, again, has an interface via bus SYSSV to the overall systems control, or a user interface computer, from where it receives parameters for encoder set-up, mode selection, etc..

Via bus SYSSV also encoder status information, such as error codes, may be communicated.

Specifically, stage 201 contains all pre-processing and data re-ordering functions. These functions may include horizontal and vertical filtering and decimation for the conversion from the original picture format to the encoding format, e.g. from 720 to 544 pixels per active line. As an example, conversion from so-called 4:2:2 YC_{b}Cᵣ organisation, appropriate filtering and decimation of the chrominance signals to achieve the 4:2:0 encoding format, may be part of the processing functions in stage 201. Another important task of the circuit in stage 201 is the elimination of horizontal and vertical blanking intervals and the re-ordering of video data from field and line sequential scanning to the appropriate macro block related scanning order which is useful for MPEG-2 encoding. Stage 201 provides different types of macro block data, such as luminance and YC_{b}Cᵣ data, with their appropriate timing behaviour for the subsequent processing blocks of the overall encoder. Other processing options, such as noise reduction and the detection of redundant fields in case of movie picture sequences, may be part of the functionality in stage 201. This pre-processing stage in the video encoding architecture is also responsible for detecting synchronisation signals at its SCLK input and for generating synchronisation signals for the respective macro block output signals and for the rest of the encoder circuits.

Stage 207 contains the other processing elements, in particular the DCT and its inverse, quantization and inverse quantization, run length and variable length coding functions, header assembling, and packetization. This specific partitioning of functions is suitable and advantageous. This stage 207 is described in a further European patent application EP 95 402 786 (publication number EP-A-0 777 387) of the applicant.

The parallel interfaces may use a 27 MHz clock whereas the general processing clock rate is e.g. 54 MHZ. The basic functions as shown in Fig. 1, as far as MPEG1 is concerned, can be carried out with a circuitry like on the STi3230 chip of SGS-Thomson. Motion estimation and motion estimation controller circuitry as such is known from the STi3220 and STi3223 chips of SGS-Thomson. DCT and inverse DCT can be carried out using circuitry like on the IMSA121, STV3208 and STV3200 chips of SGS-Thomson.

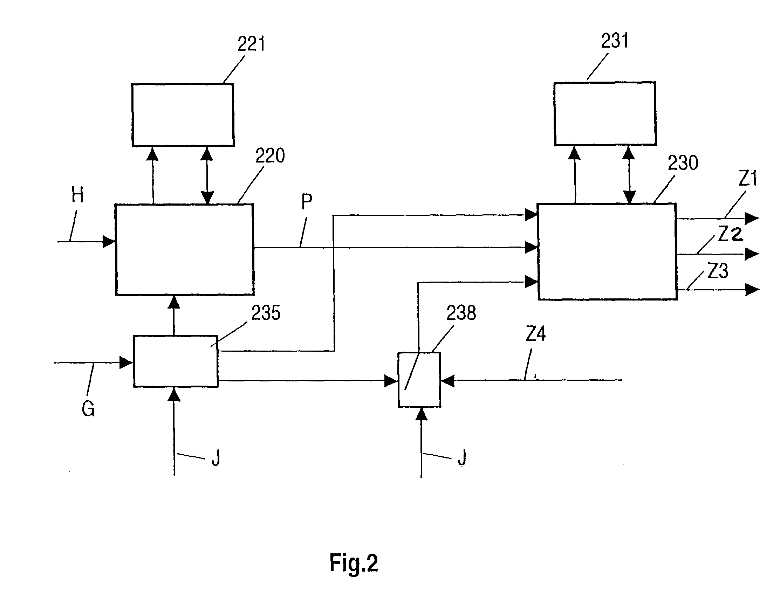

In a more detailed pictorial, Fig. 2 shows a hierachical motion estimation apparatus as used by the invention. Some reference numbers are identical with reference numbers used in Fig. 1. They denote the same components as explained to Fig. 1. Therefore they need not be explained here once again. Hierarchical motion estimation is related to more elaborate motion estimation techniques, where more processing power is needed for implementing motion vector search procedures. Hierarchical motion estimation is based on the principle that motion vector search is executed in several steps. Stages 220 and 230 operate on luminance signals but can in addition operate on chrominance signals. Stage 230 preferably calculates motion vectors having 1/2-pel accuracy.

In this architecture, coarse motion estimation stage 220 receives its pre-processed input data from pre-processing stage 201 via bus H. Coarse motion estimation stage 220 performs vector search on decimated pixel data. Original data also could be digested by motion estimation stage 220. This stage 220 may store the data in its memory 221 and retrieve respective search data from that memory. The bus H is also connected to bit stream encoding stage 207 for coding complexity pre-analysing purposes. Pre-processing stage 201 provides another signal on bus G directly to fine motion estimation stage 230. Preferably, bus H transfers no chrominance data whereas bus G does.

Advantageously on buses G and H video picture data is carried in a specific order, related to MPEG-2 macro block organisation, together with specific synchronisation signals. The YC_{b}Cᵣ data on bus G may be delayed by one frame compared to the corresponding data on bus H in delay unit 235. This delay time compensates the processing delay of coarse motion estimation stage 220. It can alternatively be incorporated into memory 202.

On bus P connecting coarse and fine motion estimators 220 and 230 data for initial motion vectors, as computed in coarse motion estimation stage 220, is carried to fine motion estimation stage 230, which computes the final motion vectors.

Reference numeral 238 denotes a switch circuit, which allows to feed to fine motion estimator 230 adequately delayed original pixel data from bus G or reconstructed pixel data from the encoder prediction loop via bus Z4. Both cases may be desired by the prediction process. Switch circuit 238 and delay unit 235 are controlled by controller 209 via bus J. Bus J carries the standard controller interface signals.

Fine motion estimation stage 230 controls its memory unit 231 for storing and retrieving intermediate data and search range pixels.

On bus Z1 macro block data is carried from stage 230 to stage 207. This is the corresponding original YC_{b}Cᵣ data as carried on bus G, but delayed according to the processing time in stage 230 and in delay unit 235 so that it is available simultaneously with the prediction data on bus Z2.

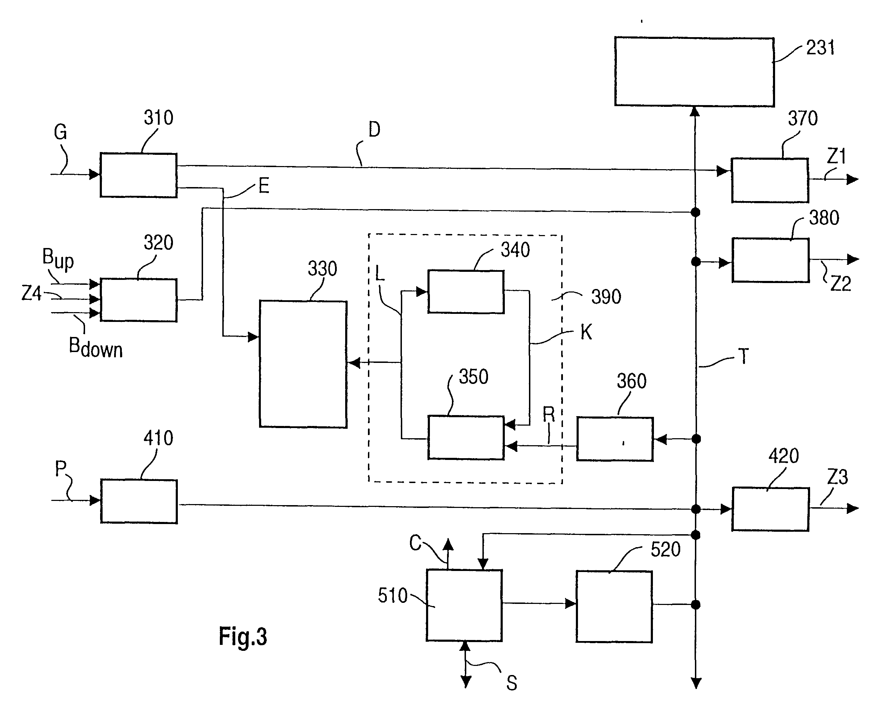

Bus Z2 transfers predicted macro block data from stage 230 to stage 207. This macro block data relates to the fine motion vectors and prediction modes which are calculated in stage 230 and forwarded on bus Z3 to stage 207. In this configuration, the processor 230 does not only generate the motion vectors but selects the vector for the best prediction. This process will be explained in connection with Fig. 3. Due to buses Z2, Z3 and Z4 the encoder prediction loop of the whole encoding arrangement in Fig. 1 is closed. This is an important aspect of the architecture of the fine motion estimator 230 according to this invention.

Fig. 3 shows the embodiment of the fine motion estimator 230 according to the present invention. At first, the constitution of the fine motion estimator will be explained. There are some reference numerals which are repeatedly used as in Fig. 2. They denote the same components as explained in connection with Fig. 2 and need not be explained here once again. Block 310 serves as a cache memory, which receives the original, undecimated YC_{b}Cᵣ data via bus G and a delay unit and forwards it on bus D to another cache memory unit 370, which again generates the output data of the delayed YC_{b}Cᵣ pixels on bus Z1 in appropriately sychronized fashion to the prediction data available on bus Z2. Synchronisation signals generated by the pre-processor 201 are used for this purpose. On bus E, block 310 also feeds the prediction path. The prediction path consists of a block matching array 330, a search window cache memory 360, an averaging buffer 340, and an averaging / interpolation filter 350. Block matching array 330 is connected to averaging buffer 340 and averaging / interpolation filter 350 via bus L. Averaging buffer 340 is connected to averaging / interpolation filter 350 via bus K. Averaging buffer 340 and averaging / interpolation filter 350 built a feedback loop 390 for the block matching array 330. Search window cache memory 360 is connected to averaging / interpolation filter via bus R. Search window cache memory 360 is connected to system data bus T. System data bus T leads to the external memory unit 231. Block 320 serves as a cache memory unit for storing of reconstructed pixel data from the encoder prediction loop via bus Z4. Two other buses Bᵤₚ and B_{down} are connected to block 320. They are used when HDTV pictures should be encoded, which will be explained later on. Block 320 is also connected to system data bus T. A further cache memory unit 410 serves as an input buffer for coarse motion vector data being determined by coarse motion estimation stage 220. This cache memory unit 410 is also connected to system data bus T. Two other cache memory units 380 and 420 are connected to system data bus T. Cache memory unit 380 is used for intermediate storing of predicted macro block data which is calculated e.g. in a control unit 510. Control unit 510, which is also an integrated part of the fine motion estimator, is also connected to system data bus T. From control unit 510 an appropriate control bus C leads to all components of the fine motion estimator 230. Furthermore, a memory management unit 520 is included in the fine motion estimator 230. The memory management unit 520 does all address calculation required for reading and writing data from and to the external memory unit 231. Therefore it is connected to data bus T. The address bus to the external memory unit 231 is not depicted. Memory management unit 520 is also controlled by control unit 510 to which it is connected via an appropriate control, adress and data bus.

The function of the components of the fine motion estimator 230 will be explained as follows: The fine motion estimation section performs a motion estimation in a small search window pointed to by a coarse motion vector generated externally in the coarse motion estimator 220. Original YC_{b}Cᵣ pixel data is received via data bus E through cache memory 310. Reconstructed YC_{b}Cᵣ pixel data is received through bus Z4 and cache memory 320 and is read into external memory via bus T. The external memory may consist of standard memory devices such as DRAM, SDRAM, etc..

The pixel data for the search window are taken from the reconstructed data from the encoder prediction loop written in the external memory unit. The final motion vector search is performed on calculated data from the prediction loop, which generally yields more accurate motion rendition, since the noise from the prediction process is taken into account. This allows more accurate motion compensation.

The present configuration allows the block search to be performed in all modes defined for motion estimation in ISO 13818-2 (MPEG-2 Video). Such motion estimation modes are: the "0" valued motion vector search mode (backward/forward), the frame prediction mode (forward/backward/interpolated), the field prediction mode (forward/backward/interpolated) and the dual prime mode. All this modes are described in MPEG2 standard and need not be explained here in every detail. Also the article of Dr. Teichner "Der MPEG2-Standard; generische Codierung für Bewegtbilder und zugehöriger Audio-Information; Main Profile: Kern des MPEG2-Standards (Teil2)" in Fernseh- und Kino-Technik Volume 48. No. 5/1994, pages 227 - 237, gives a good overview of this motion estimation modes.

In the external memory, all pixel data corresponding to search data in several fields and frames as required for forward and backward, field and frame prediction modes may be held. The pixel data written through cache memory 320 into the external memory unit 231 is read through bus T as search window data into the cache memory 360. Memories 310 and 360 provide the reference block and the search window data for the block matching process, which is executed in block 330.

The best field or frame prediction mode is found by using a 2-stage search strategy. Step one is done by calculating distortions at full pel resolution. During the second step vectors at half pel resolution are calculated. In frame based predictions a single motion vector is used to form a prediction for a 16*16 pixel frame based macro block. In the field based prediction separate motion vectors are used to form predictions for pixels 16H*8V blocks in one field separately from predictions for pixels in the other field.

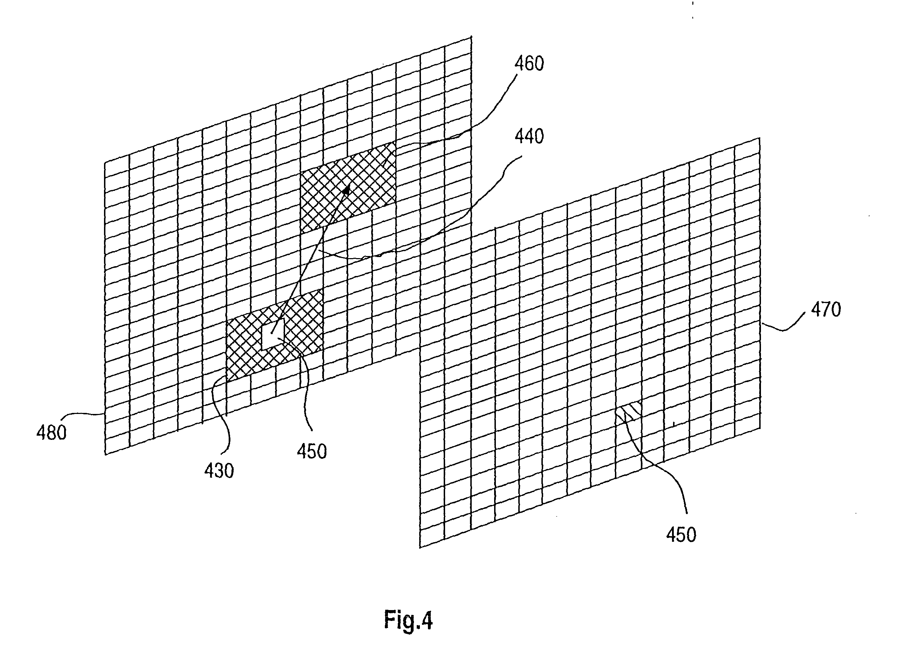

Fig. 4 shows possible windows which can be used in the fine motion estimation stage for the block search. Reference numeral 470 denotes a video picture which was built with original YC_{b}Cᵣ data. Reference numeral 480 denotes a predicted picture which was built with reconstructed YC_{b}Cᵣ data. Reference numeral 450 denotes the reference macro block to which a fine motion vector shall be determined. Two possibilities are shown in picture 480. First, a search in the window surrounding the same position of the current macro block can be performed, if in the coarse motion estimation stage 220 no appropriate motion vector could be found. This window has the reference number 430. Second, vector search can be performed on any window indicated by the motion vectors 440 which have been determined by the prior coarse motion estimation stage 220. These initial motion vectors 440 are received on bus P through buffer 410 in Figure 3 from where they are written via bus T in external memory 231 until further processing. Upon the time they are needed, the vectors are read back via bus T by the controller circuit 510, which calculates the appropriate addresses for the external memory through address generator 520 in order to read the respective pixel data of the window according to motion vector 440 from the reconstructed (or delayed original) YC_{b}Cᵣ pixel data stored in the external memory. This window has the reference numeral 460. It is a special aspect of this invention, that the address generation for reading the window data may also account for scaling of the motion vector data coming from previous motion estimation stages. Since the previous motion estimation stages are usually performed on decimated pixel data, for instance for hierarchical motion estimation purposes, the initial motion vectors usually are delivered in decimated or scaled form and need to be rescaled to the required pixel resolution.

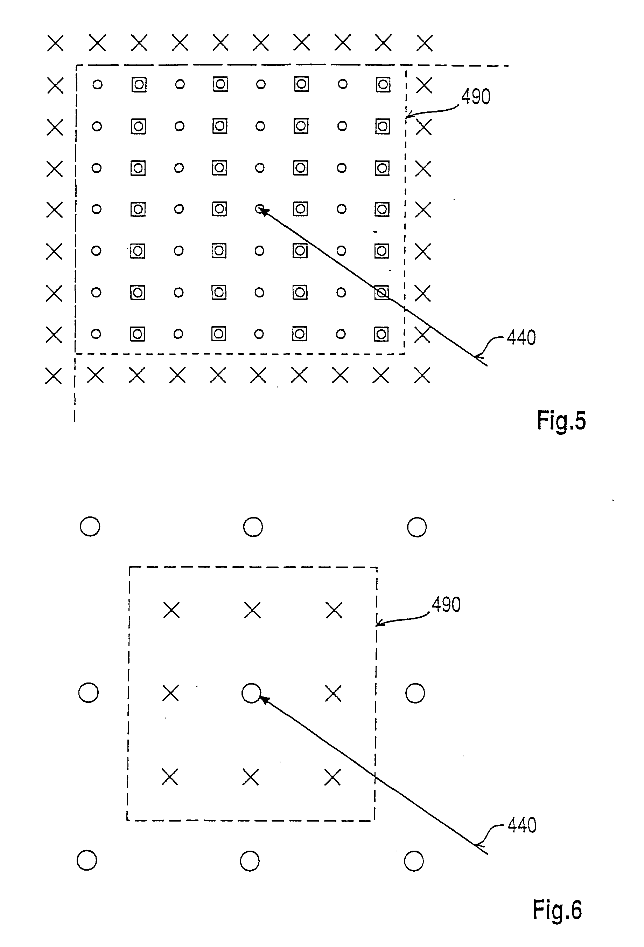

In Fig. 5 two full pel search modes are illustrated. The starting point of the full pel search is the coarse motion vector 440. Due to the fact, that the coarse motion vector was scaled up due to decimation at the coarse level, the coarse motion vectors need to be rescaled. The search window 490 for the full pel search is shown with dashed lines. The search window range is e.g. +3/-4 pixel horizontally and +3/-3 pixel vertically. The circle symbols denote vector positions, which are checked at a first full pel search mode. They are identical with pixel positions. The square symbols denote vector positions, which are checked at a second full pel search mode in which only every second pixel horizontally is used.

Fig. 6 illustrates the half pel refinement. The search window 490 for the half pel search is once again shown with dashed lines. Pixel positions are shown with circle symbols. The cross symbols denote the checked vector positions for the half pel search. The search window range is +0.5/-0.5 pixel horizontally and vertically using half pel steps. Reference numeral 440 denotes once again a motion vector which was determined one step before with full pel accuracy.

The interpolated field or frame prediction mode will be used for bidirectionally predicted macro blocks. The block matching process has to be carried out twice, once for forward prediction and secondly for backward prediction. The forward and backward prediction values are averaged to form the best predictions values. This averaging process will be done in averaging and interpolating filter unit 350.

In block matching array 330 the comparison of pixel data of the reference macro block and the pixel data of the reconstructed macro block according to each motion vector of the search window under consideration is carried out. This comparison yields to a so-called distortion value, which will be transferred to the external memory unit 231. After the full search has been carried out for all possible vectors of the search window and for all different modes, the control unit 510 will decide, which mode and which vector yields the best prediction values. This is done by comparing the distortion values of all vector positions for the different modes. The lowest distortion value is the criterion for the decision which motion vector will be transmitted to the bit stream encoding stage 207 via cache memory 420. The control unit 510 determines the appropriate addresses for the respective motion vectors and corresponding macro block data in the external memory through address controller 520. Motion vectors and macro block data for the best prediction are then read out through bus T and forwarded to the bit stream encoding circuit 207 following the motion estimation via cache memories 420 and 380, respectively.

The block matching is done by using the luma data of an YC_{b}Cᵣ macro block. The best prediction is found on luma data only, but the fine motion estimation stage has to output a predicted YC_{b}Cᵣ data macro block. The chrominance data for the predicted macro block are inserted by the control unit 510. A separate prediction generator unit could be used for this purpose.

In the present invention, the controller circuit 510 may be implemented in a programmable fashion, which allows a flexible handling of prediction situations. As an example all prediction mode related distortion values may be given a specific weight, which leads to a simple selection of the lowest distortion value. Alternatively, some prediction modes may have higher priority, which can be taken into account in several ways, for instance by putting thresholds onto values resulting from prediction modes with lower priority, or multiplying these values with certain weighting factors. Furtheron, it could be considered that some modes need more coding expenditure than the other one by giving different weighting factors.

In the present invention, with a generic on-chip controller structure in the context of dedicated processing elements, another choice for improved motion prediction is possible by performing filtering operations on the motion vectors as determined by the block matching process, since all motion vectors of subsequent predictions are stored in the external memory before they are supplied to the subsequent encoding stage.

In a simple but important variation of the circuitry, motion estimation can also be performed on images, in particular HDTV images, which are partitioned into horizontal stripes. For this purpose, the two additional input buses Bᵤₚ and B_{down} are connected to input cache memory 320 in Figure 3. These buses allow to use reconstructed pixel data from upper and lower stripes of the HDTV images, which has been processed by similar devices in parallel, for the block matching process. This is needed for a seemless partitioning of the motion estimation.

## Claims

1. Apparatus, for fine motion estimation in a hierarchical motion estimation device, including a block matching array (330), a control circuit (510) and a, memory unit (231), the block matching array receiving:
i) the original pixel data at least for the reference block (450) to which a fine motion vector has to be calculated,
ii) coarse motion vector data at least for the reference block (450) to which a fine motion vector has to be calculated, determined in an external coarse motion estimation device (220),
iii) reconstructed pixel data for a search window (430, 460) corresponding to the coarse motion vector data for the reference block (450),
**characterised in that,** a feedback loop (390) is provided for the block matching array (330) consisting of an averaging buffer (340) and a filter unit (350) which provides the block matching array (330) with the coarse motion vector data and the pixel data for the search window (430, 460), wherein incoming data for the feedback loop (390) first passes the filter unit (350) before being stored in the averaging buffer (340).

2. Apparatus according to claim 1, **wherein** the memory unit (231) is connected to the feedback loop (390) via a system data bus (T).

3. Apparatus according to claim 1 or 2, **wherein** a search window cache memory unit (360) is provided for intermediate storing of pixel data of the search window which is loaded from memory unit (231) via system data bus (T) and that the search window cache memory unit (360) is connected to the feedback loop (390) via a second data bus (R).

4. Apparatus according to claim 3, **wherein** the second data bus (R) connects the search window cache memory unit (360) with the filter unit (350) of said feedback loop (390).

5. Apparatus according to one of the preceding claims 1 to 4, **wherein** the filter unit (350) is an interpolation and/or averaging filter unit for interpolation and/or averaging of pixel data especially for half-pel and dual prime search modes.

6. Apparatus according to one of the preceding claims 1 to 5, further comprising a first motion vector cache memory unit (410) which is also connected to the system data bus (T) and which is in addition connected to a data bus (P) which transfers vector data from a coarse motion estimation device (220) to it.

7. Apparatus according to one of the preceding claims 1 to 6, further comprising a first cache memory unit (310) for intermediate storing of original pixel data at least for the reference block to which a fine motion vector has to be calculated, wherein the first cache memory unit (310) is connected to the block matching array (330) via an appropriate data bus (E).

8. Apparatus according to claim 7, wherein first cache memory unit (310) is connected to a second cache memory unit (370) via a further data bus (D).

9. Apparatus according to one of the preceding claims 1 to 8, further comprising a third cache memory unit (320) for intermediate storing of reconstructed pixel data at least of a predicted reference block, wherein the third cache memory unit (320) is connected to system data bus (T) via an appropriate further data bus.

10. Apparatus according to claim 9, wherein the third cache memory unit (320) is connected to further data buses (Bᵤₚ, B_{down}) which feed pixel data of an upper and lower horizontal stripe of a picture to the third cache memory unit (320).

## Patentansprüche

1. Gerät zur Fein-Bewegungsbestimmung in einer hierarchischen Bewegungsbestimmungs-Vorrichtung mit einer Block-Anpassungsanordnung (330), einer Steuerschaltung (510) und einer Speichereinheit (231), wobei die Block-Anpassungsanordnung empfängt:
i) die ursprünglichen Pixeldaten wenigstens für den Referenzblock (450), für den ein Fein-Bewegungsvektor berechnet werden soll,
ii) Grob-Bewegungsvektor-Daten wenigstens für den Referenzblock (450), für den ein Fein-Bewegungsvektor berechnet werden soll, bestimmt in einer externen Grob-Bewegungsbestimmungs-Vorrichtung (220),
iii) rekonstruierte Pixeldaten für ein Suchfenster (430, 460) entsprechend den Grob-Bewegungsvektor-Daten für den Referenzblock (450),
**dadurch gekennzeichnet, daß** eine Rückkopplungsschleife (390) für die Block-Anpassungsanordnung (330) vorgesehen ist, die aus einem den Durchschnitt bildenden Puffer (340) und einer Filter-Einheit (350) besteht, die an die Block-Anpassungsanordnung (330) die Grob-Bewegungsvektor-Daten und die Pixeldaten für das Suchfenster (430, 460) liefert, wobei ankommende Daten für die Rückkopplungsschleife (390) erst die Filtereinheit (350) durchlaufen, bevor sie in dem den Durchschnitt bildenden Puffer (340) gespeichert werden.

2. Gerät nach Anspruch 1, bei dem die Speichereinheit (231) mit der Rückkopplungsschleife (390) über einen System-Datenbus (T) verbunden ist.

3. Gerät nach Anspruch 1 oder 2, bei dem eine Suchfenster-Cache-Speichereinheit (360) für die Zwischenspeicherung von Pixeldaten des Suchfensters vorgesehen ist, die von der Speichereinheit (231) über den System-Datenbus (T) geladen wird, und daß die Suchfenster-Cache-Speichereinheit (360) mit der Rückkopplungsschleife (390) über einen zweiten Datenbus (R) verbunden ist.

4. Gerät nach Anspruch 3, bei dem der zweite Datenbus (R) die Suchfenster-Cache-Speichereinheit (360) mit der Filtereinheit (350) der Rückkopplungsschleife (390) verbindet.

5. Gerät nach einem der Ansprüche 1 bis 4, bei dem die Filter-einheit (350) eine Interpolations- und/oder eine Durchschnittsbildungs-Filtereinheit für die Interpolation und/oder die Durchschnittsbildung von Pixeldaten, insbesondere für Half-pel- und Dual-prime-Such-Betriebsarten ist.

6. Gerät nach einem der Ansprüche 1 bis 5, umfassend eine erste Bewegungsvektor-Cache-Speichereinheit (410), die auch mit dem System-Datenbus (T) verbunden ist, und die zusätzlich mit einem Datenbus (P) verbunden ist, der zu ihr Daten von einer Grob-Bewegungsfeststellungs-Vorrichtung (220) überträgt.

7. Gerät nach einem der Ansprüche 1 bis 6, umfassend eine erste Cache-Speichereinheit (310) zur Zwischenspeicherung von ursprünglichen Pixeldaten wenigstens für den Referenzblock, für den ein Fein-Bewegungsvektor berechnet werden soll, wobei die erste Cache-Speichereinheit (310) mit der Block-Anpassungsanordnung (330) über einen geeigneten Datenbus (E) verbunden ist.

8. Gerät nach Anspruch 7, bei dem die erste Cache-Speichereinheit (310) mit einer zweiten Cache-Speichereinheit (370) über einen weiteren Datenbus (D) verbunden ist.

9. Gerät nach einem der Ansprüche 1 bis 8, umfassend eine dritte Cache-Speichereinheit (320) für die Zwischenspeicherung von rekonstruierten Pixeldaten wenigstens von einem vorhergesagten Referenzblock, wobei die dritte Cache-Speichereinheit mit dem System-Datenbus (T) über einen geeigneten weiteren Datenbus verbunden ist.

10. Gerät nach Anspruch 9, bei dem die dritte Cache-Speichereinheit (320) mit weiteren Datenbussen (Bᵤₚ, B_{down}) verbunden ist, die Pixeldaten von einem oberen und unteren horizontalen Streifen eines Bildes der dritten Cache-Speichereinheit zuführen.

## Revendications

1. Dispositif d'estimation de mouvement fin dans un dispositif d'estimation de mouvement hiérarchique, comportant un réseau de correspondance de blocs (330), un circuit de commande (510) et une unité de mémoire (231), le réseau de correspondance de blocs recevant :
i) les données de pixels d'origine au moins du bloc de référence (450) par rapport auquel un vecteur de mouvement fin doit être calculé,
ii) des données de vecteur de mouvement approximatif au moins du bloc de référence (450) par rapport auquel un vecteur de mouvement fin doit être calculé, déterminées dans un dispositif d'estimation de mouvement approximatif externe (220),
iii) des données de pixels reconstruites d'une fenêtre de recherche (430, 460) correspondant aux données de vecteur de mouvement approximatif du bloc de référence (450),
**caractérisé en ce qu'**une boucle de contre-réaction (390) est fournie pour le réseau de correspondance de blocs (330) consistant en un tampon de moyennage (340) et une unité de filtre (350) qui fournit au réseau de correspondance de blocs (330) les données de vecteur de mouvement approximatif et les données de pixels de la fenêtre de recherche (430, 460), dans lequel les données entrantes pour la boucle de contre-réaction (390) passent d'abord dans l'unité de filtre (350) avant d'être mémorisées dans le tampon de moyennage (340).

2. Dispositif selon la revendication 1, dans lequel l'unité de mémoire (231) est connectée à la boucle de contre-réaction (390) par l'intermédiaire d'un bus de données de système (T).

3. Dispositif selon la revendication 1 ou 2, dans lequel une unité de mémoire cache de fenêtre de recherche (360) est fournie pour une mémorisation intermédiaire des données de pixels de la fenêtre de recherche qui sont chargées depuis l'unité de mémoire (231) par l'intermédiaire d'un bus de données système (T) et l'unité de mémoire cache de fenêtre de recherche (360) est connectée à la boucle de contre-réaction (390) par l'intermédiaire d'un deuxième bus de données (R).

4. Dispositif selon la revendication 3, dans lequel le deuxième bus de données (R) connecte l'unité de mémoire cache de fenêtre de recherche (360) à l'unité de filtre (350) de ladite boucle de contre-réaction (390).

5. Dispositif selon l'une quelconque des revendications précédentes 1 à 4, dans lequel l'unité de filtre (350) est une unité de filtre d'interpolation et/ou de moyennage pour l'interpolation et/ou le moyennage des données de pixels spécialement pour les modes de demi-recherche d''éléments d'image et de recherche principale double.

6. Dispositif selon l'une quelconque des revendications précédentes 1 à 5, comprenant en outre une première unité de mémoire cache de vecteur de mouvement (410) qui est également connectée au bus de données système (T) et qui est en plus connectée à un bus de données (P) qui transfère dans celle-ci des données de vecteur provenant d'un dispositif d'estimation de mouvement approximatif (220).

7. Dispositif selon l'une quelconque des revendications précédentes 1 à 6, comprenant en outre une première unité de mémoire cache (310) pour la mémorisation intermédiaire de données de pixels d'origine au moins du bloc de référence par rapport auquel un vecteur de mouvement fin doit être calculé, dans lequel la première unité de mémoire cache (310) est connectée au réseau de correspondance de blocs (330) par l'intermédiaire d'un bus de données approprié (E).

8. Dispositif selon la revendication 7, dans lequel la première unité de mémoire cache (310) est connectée à une deuxième unité de mémoire cache (370) par l'intermédiaire d'un autre bus de données (D).

9. Dispositif selon l'une quelconque des revendications précédentes 1 à 8, comprenant en outre une troisième unité de mémoire cache (320) pour la mémorisation intermédiaire de données de pixels reconstruites d'au moins un bloc de référence prédit, dans lequel la troisième unité de mémoire cache (320) est connectée au bus de données système (T) par l'intermédiaire d'un autre bus de données approprié.

10. Dispositif selon la revendication 9, dans lequel la troisième unité de mémoire cache (320) est connectée à d'autres bus de données (Bₕₐᵤₜ, B_{bas}) qui alimentent des données de pixels d'une bande horizontale supérieure et inférieure d'une image dans la troisième unité de mémoire cache (320).
